# FASCICULE DE BREVET EUROPEEN

(11) **EP 3 248 860 B1**
(45) Date de publication et mention de la délivrance du brevet: **18.03.2020**
(21) Numéro de dépôt: 17173123.5
(22) Date de dépôt: 26.05.2017
(51) Int. Cl.: B62K 19/02, B62K 19/06, B62K 19/20, B62K 3/08

(54) **CADRE A TUBE EN NID D'ABEILLE POUR VELO CARGO**
RAHMEN MIT WABENROHR FÜR LASTENFAHRRAD
FRAME WITH HONEYCOMB TUBE FOR CARGO BICYCLE

(30) Priorité: 27.05.2016 FR 1654828
(43) Date de publication de la demande: 29.11.2017
(73) Titulaire: NEO MOUV, 72200 La Fleche (FR)
(72) Inventeur: VAXELAIRE, Philippe, 72000 LE MANS (FR)
(74) Mandataire: Lefevre-Groboillot, David André

(56) Documents cités:
- CN-A- 101 367 419
- DE-A1- 10 005 573
- KR-A- 20160 050 583
- TW-A- 200 904 695
- Batavus: "Batavus Collectie Fietsen", , 1 janvier 2013 (2013-01-01), XP055403428, Extrait de l'Internet: URL:https://www.batavus.nl/files/1/0/8/lr_ fietscat2013.pdf [extrait le 2017-09-04]

## Description

L'invention porte sur un vélo à assistance électrique (VAE) qualifié de Cargo, car il doit permettre le transport de charges importantes.

Un tel VAE doit emporter une charge par exemple de 200kgs (en comptant l'opérateur). Il est donc indispensable de prévoir un cadre renforcé permettant d'accueillir une telle charge.

Par ailleurs un vélo Cargo implique, dans le cadre d'une utilisation « distribution », par exemple par un postier ou un coursier, de nombreuses montées et descentes de l'opérateur.

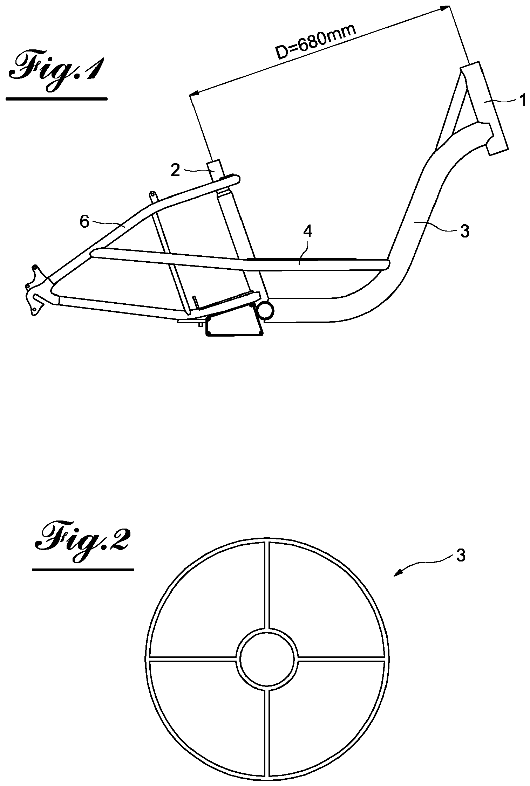

Il est donc souhaité d'avoir un enjambement bas, mais aussi large en ce qui concerne la distance D entre le tube de direction 1 (prévu pour accueillir la potence) et le tube de tige de selle 2 (prévu pour accueillir la tige de selle) (figure 1), qui doit être de 680mm, alors que sur un vélo classique la distance est de 580mm environ. De ce fait, il fallait trouver une conception de cadre ouverte, longue mais aussi rigide.

Document XP055403428 montre le préambule de la revendication 1.

Pour rigidifier un cadre de vélo en aluminium on peut ajouter des tubes en aluminium assurant un rôle de contreventement et donnant ainsi une rigidité au cadre.

Le problème est que ces tubes occupent de l'espace et sont en contradiction avec la nécessité d'avoir un cadre ouvert (enjambement facile).

Avec un cadre plus resserré on cherche aussi à alléger au maximum le poids du vélo. Pour ce qui est du VAE Cargo le critère de poids n'a pas été pris en compte car l'assistance du moteur compense largement le surpoids du VAE.

L'invention est donc un cadre de vélo constitué de tubes métalliques soudés les uns aux autres parmi lesquels un tube de tige de selle et un tube de direction, caractérisé en ce qu'il comprend, pour relier le tube de direction et le tube de tige de selle un tube de structure comprenant une armature interne de renforcement sur toute sa longueur, ledit tube de structure étant relié à la partie inférieure du tube de tige de selle.

L'armature interne peut définir un tube alvéolaire.

Des tubes peuvent relier les haubans arrière du cadre à un point intermédiaire du tube de structure à armature interne.

Les figures 1, 3 et 4 présentent le cadre du vélo. La figure 2 présente la section en coupe du tube principal.

Nous avons donc utilisé un tube en nid d'abeille 3, du bas du tube de direction 1 au bas du tube de la tige de selle 2. Ce type de tube, qui comporte des structures rigidifiantes dans son volume interne (figure 2 qui présente la coupe transversale du tube) est plus rigide de par sa fabrication, et permet d'assurer la fonction rigidité tout en ayant un cadre ouvert et allongé, sans avoir à ajouter de trop nombreux tubes rigidifiants.

Le tube en nid d'abeille 3 présente par exemple une symétrie d'ordre 4. Toute structure régulière peut être envisagée, voire une structure irrégulière.

Le tube en nid d'abeille 3 est plié selon une forme permettant un enjambement facile du vélo. Il a une courte section à angle droit du tube de direction 1, une section droite descendante et une section droite sensiblement horizontale à l'approche du tube de tige de selle.

Afin de parfaire cette rigidité nous avons cependant ajouté de chaque côté, un tube rond 4 de 25,4mm de diamètre. Ils sont reliés au tube en nid d'abeille 3 à l'angle entre la section descendante et la section horizontale, et aux éléments arrière du cadre (haubans arrière du cadre). Ils sont aussi reliés au tube de tige de selle 2 à environ un tiers de sa hauteur par l'intermédiaire d'une plaque aluminium soudée 5.

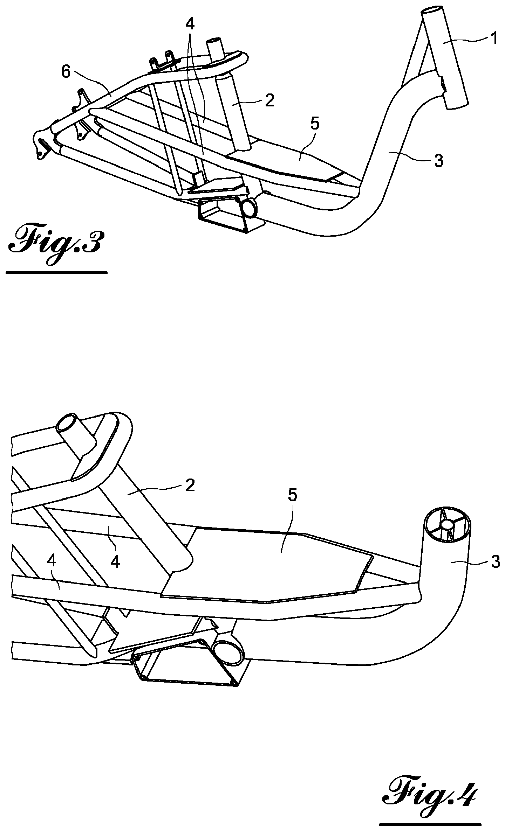

Les deux tubes 4 sont reliés entre eux et au tube de tige de selle 2 par la plaque d'aluminium soudée 5 (figures 3 et 4).

Les tubes ronds 4 sont soudés sur le tube en nid d'abeille 3 et sur les haubans 6, et à la plaque aluminium 5.

La présence de la plaque en aluminium 5 permet de rigidifier le cadre et ainsi offrir une grande maniabilité au vélo cargo.

## Revendications

1. Cadre de vélo constitué de tubes métalliques soudés les uns aux autres parmi lesquels un tube de tige de selle (2) et un tube de direction (1), le cadre comprenant, pour relier le tube de direction et le tube de tige de selle, un tube de structure (3) **caractérisé en ce que** le tube de structure comprend une armature interne de renforcement sur toute sa longueur, ledit tube de structure étant relié à la partie inférieure du tube de tige de selle, des tubes (4) reliant des haubans arrière (6) du cadre à un point du tube de structure à armature interne, à un angle entre une section descendante et une section horizontale du tube de structure, pour assurer une rigidité du cadre tout en définissant un enjambement bas, dans lequel l'armature interne est telle que le tube est un tube en nid d'abeilles.

2. Cadre de vélo selon la revendication 1, dans lequel l'armature interne définit un tube alvéolaire.

3. Cadre de vélo selon la revendication 1 ou la revendication 2, dans lequel la coupe du tube de structure à armature interne a une symétrie d'ordre 4.

4. Cadre de vélo selon l'une des revendications 1 à 3, pour vélo à assistance électrique.

5. Cadre de vélo selon l'une des revendications 1 à 4, dans lequel le tube comprend, vu en coupe, un tube interne relié au tube externe par quatre parois disposées selon une symétrie d'ordre 4.

6. Cadre de vélo selon l'une des revendications 1 à 5, **caractérisé en ce qu'**il est renforcé de telle sorte à pouvoir accueillir une charge de 200 kgs en comptant l'opérateur.

7. Cadre de vélo selon l'une des revendications 1 à 6, **caractérisé en ce que** la distance entre le tube de direction et le tube de tige de selle est de l'ordre de 680 mm.

8. Cadre de vélo selon l'une des revendications 1 à 7, **caractérisé en ce que** les tubes reliant des haubans arrières du cadre à un point du tube de structure à armature interne sont reliés au tube de tige de selle à environ 1/3 de sa hauteur par l'intermédiaire d'une plaque en aluminium soudée (5) .

## Patentansprüche

1. Fahrradrahmen, gebildet aus miteinander verschweißten Metallrohren, darunter einem Sattelstangenrohr (2) und einem Lenkerrohr(1), der Rahmen umfassend, um das Lenkerrohr und das Sattelstangenrohr zu verbinden, ein Strukturrohr (3), **dadurch gekennzeichnet, dass** das Strukturrohr eine innere Verstärkungsarmierung über seine gesamte Länge umfasst, wobei das Strukturrohr am unteren Teil des Sattelstangenrohrs verbunden ist, wobei Rohre (4) hintere Schrägrohre (6) des Rahmens mit einem Punkt des Strukturrohrs mit innerer Armierung an einer Stelle zwischen einer aufsteigenden Sektion und einer horizontalen Sektion des Strukturrohrs verbinden, um eine Steifigkeit des Rahmens bei gleichzeitiger Definition eines niedrigen Durchstiegs zu gewährleisten, wobei die innere Armierung derart ist, dass das Rohr ein Wabenrohr ist.

2. Fahrradrahmen nach Anspruch 1, wobei die innere Armierung ein alveolares Rohr definiert.

3. Fahrradrahmen nach Anspruch 1 oder Anspruch 2, wobei der Schnitt des Strukturrohrs mit innerer Armierung eine vierzählige Symmetrie hat.

4. Fahrradrahmen nach einem der Ansprüche 1 bis 3 für Fahrrad mit elektrischer Unterstützung.

5. Fahrradrahmen nach einem der Ansprüche 1 bis 4, wobei das Rohr, im Schnitt gesehen, ein inneres Rohr umfasst, das mit dem äußeren Rohr durch vier Wände verbunden ist, die gemäß einer vierzähligen Symmetrie angeordnet sind.

6. Fahrradrahmen nach einem der Ansprüche 1 bis 5, **dadurch gekennzeichnet, dass** er derart verstärkt ist, dass er eine Last von 200 kg unter Berücksichtigung des Bedieners aufnehmen kann.

7. Fahrradrahmen nach einem der Ansprüche 1 bis 6, **dadurch gekennzeichnet, dass** der Abstand zwischen dem Lenkerrohr und dem Sattelstangenrohr zirka 680 mm beträgt.

8. Fahrradrahmen nach einem der Ansprüche 1 bis 7, **dadurch gekennzeichnet, dass** die Rohre, welche hintere Schrägrohre des Rahmens mit einem Punkt des Strukturrohrs mit innerer Armierung verbinden, mit dem Sattelstangenrohr in zirka 1/3 seiner Höhe über eine geschweißte Aluminiumplatte (5) verbunden sind.

## Claims

1. A bicycle frame made up of metal tubes welded to one another, including a seat post tube (2) and a head tube (1), the frame comprising, to connect the head tube and the seat post tube, a structural tube (3), **characterized in that** the structural tube comprises an inner reinforcing rail over its entire length, said structural tube being connected to the lower part of the seat post tube, tubes (4) connecting rear seat stays (6) of the frame to a point of the structural tube with internal rail, at an angle between a descending section and a horizontal section of the structural tube, to ensure rigidity of the frame while defining a lower bridge, in which the internal rail is such that the tube is a honeycomb tube.

2. The bicycle frame according to claim 1, wherein the internal rail defines a honeycomb tube.

3. The bicycle frame according to claim 1 or claim 2, wherein the cross-section of the structural tube with internal rail has a symmetry of order 4.

4. The bicycle frame according to one of claims 1 to 3, for an electric power-assisted bicycle.

5. The bicycle frame according to one of claims 1 to 4, wherein the tube comprises, seen in cross-section, an inner tube connected to the outer tube by four walls arranged according to a symmetry of order 4.

6. The bicycle frame according to one of claims 1 to 5, **characterized in that** it is reinforced so as to be able to accommodate a load of 200 kg including the operator.

7. The bicycle frame according to one of claims 1 to 6, **characterized in that** the distance between the head tube and the seat post tube is in the order of 680 mm.

8. The bicycle frame according to one of claims 1 to 7, **characterized in that** the tubes connecting rear stays of the frame to a point of the structural tube with internal rail are connected to the seat post tube at about 1/3 of its height by means of a welded aluminum plate (5).
